# EUROPEAN PATENT SPECIFICATION

(11) **EP 1 866 552 B1**
(45) Date of publication and mention of the grant of the patent: **17.03.2010**
(21) Application number: 05735422.7
(22) Date of filing: 08.04.2005
(51) Int. Cl.: F16C 11/06

(54) **METAL SPLIT BEARING COMPRESSION LOAD BALL JOINT**
DRUCKLASTKUGELGELENK MIT GETEILTEM METALLLAGER
ARTICULATION A ROTULE AVEC PALIERS METALLIQUES COUPES POUR CHARGES DE COMPRESSION

(43) Date of publication of application: 19.12.2007
(73) Proprietor: Federal-Mogul Corporation, Southfield, MI 48034 (US)
(72) Inventor: SELLERS, Roger, G., Arnold, MO 63010 (US); PARKER, Glen, C., St. Peters, MO 63376 (US); BYRNES, Thomas, J., St. Charles, MO 63303 (US)
(74) Representative: Barker, Rosemary Anne
(86) International application number: PCT/US2005/011903
(87) International publication number: WO 2006/110133

(56) References cited:
- GB-A- 929 873
- US-A- 2 274 420
- US-A- 2 635 906
- US-A- 3 103 370
- US-A- 3 951 557
- US-A- 4 871 276
- US-A- 5 772 337
- US-A- 5 997 208
- US-A- 5 997 208

## Description

### BACKGROUND OF THE INVENTION

The present invention relates to ball joint bearings, and in particular, to an improved all metal compression load ball joint utilizing a split upper bearing configured to provide a bearing surface for the top and sides of a ball stud, and to allow full engagement of the bearing with the housing and the stud simultaneously.

Conventional ball joints, and other movable sockets are used, for example, in automotive steering and suspension applications, and can be divided into two categories. The first category is for use in follower and tension load applications in which the stud member of the ball joint experiences axial tension loads, while the second category is for use in compression load applications in which the stud member of the ball joint experiences axial compression loads. Due to the different axial loads on the stud member, different ball joint designs are required for each category, which are generally not interchangeable.

In general, ball and socket joints comprise a cylindrical housing having a cylindrical internal surface and an opening through which the shank portion of a stud member extends. A ball end portion of the stud member is contained in the housing, with one or more bearing members supporting the ball end portion within the housing. Traditionally, the bearing members are composed of a synthetic resin, such as a polymer or elastomer, or a sintered alloy. These components are installed into the housing through an opening, with the ball stud extending outward through an axially disposed opening which may either be the same opening through which the components were installed, or an axially opposite opening. Conventionally, tension load ball joints, such as the M2 Technology chassis parts available from the Moog Chassis Parts division of Federal Mogul Corporation, utilize two openings at opposite ends of the housing. After the components are installed therein, one opening is closed by means of a cover-plate, spun, swaged, or welded in place, and the stud member extends outward through the opposite opening. Once secured in place, the cover-plate presses on the bearing members either directly or indirectly through a resilient rubber intermediate component.

US 3,951,557 discloses a similar tension ball joint where a split bearing of plastics material is urged into contact with the ball by the action of a spring which is retained in the opening by a cover plate.

In contrast, compression load ball joint housings, such as shown in U.S. Patent No. 6,010,271 to Jackson et al., have only a single opening through which all the components are installed during assembly, and through which the stud member protrudes. These components include a compression spring, a polymeric lower bearing, the stud member, and a metal upper bearing. Once the components are in place, and the stud member shank is protruding from the opening, the peripheral edges of the opening are swaged or rolled to retain the components in place and compressing the spring.

US 2,274,420 discloses a similar compression ball joint having the features specified in the preamble of claim 1. The lower bearing in this case is a non-metal anti-friction liner.

Once assembled, ball joints and movable sockets may be utilized as load carrying members in numerous mechanical systems, including automotive vehicle suspension and steering systems. Movable sockets or ball-joints employed in these applications are subjected to various operating conditions, and may be required to carry substantial loads. When wear develops, particularly in polymeric bearings, the performance of the movable socket or ball-joint rapidly degrades and, in the case of automotive applications, may result in erratic steering or excessive looseness and play in the vehicle suspension system.

Accordingly, it is desirable to provide a compression load ball and socket joint having an improved resistance to wear.

### BRIEF SUMMARY OF THE INVENTION

The present invention provides an improved compression load ball joint assembly as specified in claim 1.

The lower metal bearing is retained against movement by an interference fit between the outer side surface of the lower bearing and the inner side surface and inner end surface of the housing. The upper metal split bearing is enclosed by the housing within the internal cylindrical chamber, concentric with the movable stud member. The upper metal split bearing is disposed opposite the lower metal bearing to engage the movable stud member and the housing simultaneously. The split upper bearing is configured to slide within the housing to provide for a constant wear surface against the movable stud member. The spring member is preferably a Belleville washer concentrically disposed about the movable stud member to provide an axial load on the split upper bearing. The lower bearing, upper split bearing, Belleville washer, and movable stud member are contained within the housing by the cover plate which is concentrically disposed about the movable stud member and secured within the open end of the housing.

The foregoing and other objects, features, and advantages of the invention as well as presently preferred embodiments thereof will become more apparent from the reading of the following description in connection with the accompanying drawings.

### BRIEF DESCRIPTION OF THE SEVERAL VIEWS OF THE DRAWINGS

In the accompanying drawings which form part of the specification:

Figure 1A is an exploded sectional view of an improved ball joint of the present invention;

Figure 1B is a top plan view of an annular upper metal split bearing component present in Fig. 1A;

Figure 1C is an enlargement of a portion of Fig. 1A, illustrating a cover plate orientation; and

Figure 2 is an assembled sectional view of the ball joint of Fig. 1A.

Corresponding reference numerals indicate corresponding parts throughout the several figures of the drawings.

### DESCRIPTION OF THE PREFERRED EMBODIMENT

The following detailed description illustrates the invention by way of example and not by way of limitation. The description clearly enables one skilled in the art to make and use the invention, describes several embodiments, adaptations, variations, alternatives, and uses of the invention, including what is presently believed to be the best mode of carrying out the invention.

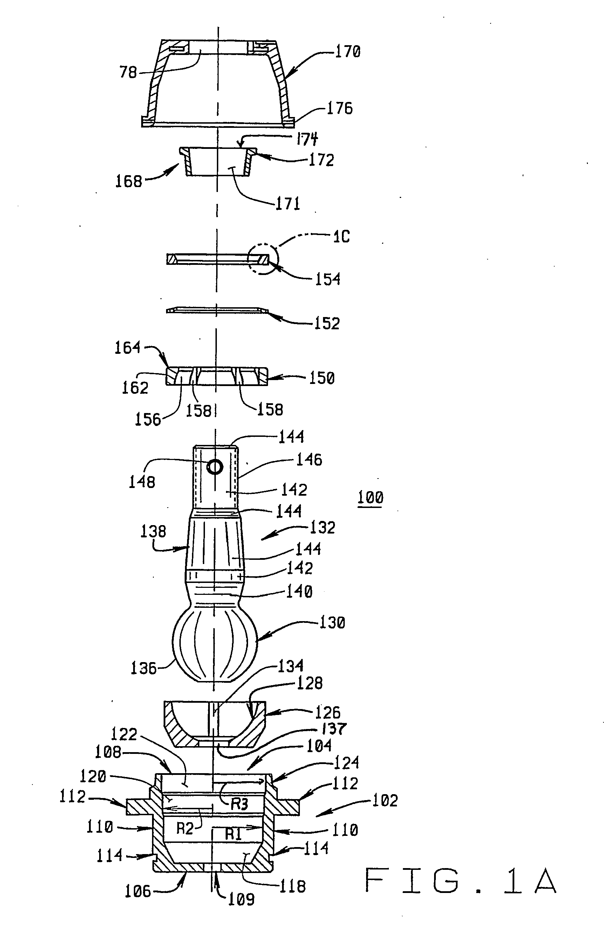

Turning to Figure 1A, a movable joint 100 of the present invention is shown in an exploded view. A metal housing 102, within which the various internal components of the movable joint 100 are enclosed, is generally cylindrical, with a central bore 104 defining a side wall having a closed lower end 106 and an open upper end 108. A lubrication or wear indicator passage 109 may be axially disposed in the closed lower end 106, providing access to the central bore 104 after assembly of the movable joint 100. The exterior surface 110 of housing 102 may follow the general contour of the central bore 104. In the embodiment illustrated, the exterior surface 110 further includes an annular flange 112 and a annular groove 114. The annular flange 112 and annular groove 114 are configured for attachment of movable joint 100 to other components (not shown). As may be appreciated, the annular flange 112 and annular grove 114 may be adapted for other specific kinds of installations employing threads or other connectors (not shown).

The central bore 104 of the housing 102 is generally cylindrical having a radius R1, and preferably Includes truncated conical portion 118 adjacent the closed lower end 106. An upper bearing portion 120 of the central bore 104 is preferably provided with an increased radial dimension of R2, sized to receive a bearing component. Finally, a closure portion 122 of the central bore 104, adjacent the open upper end 108 is preferably provided with an increased radial dimension of R3, such that R1 < R2 ≤ R3. The closure portion 122 corresponds with a reduced-thickness deformable portion 124 of the housing 102 configured for swaging or rolling in a radially inward direction to enclose components within the central bore 104 after assembly.

To assemble the movable joint 100, a lower bearing 126 sized for an interference fit within the central bore 102 and truncated conical portion 118 is seated against the closed lower end 106. The lower bearing 126 is formed from metal, such as a sintered alloy, and includes an inner hemispherical surface 128 axially aligned with a vertical axis VA of the housing, and sized to receive a ball portion 130 of a metal movable stud member 132. The metal lower bearing 126 preferably includes one or more slots or grooves 134 disposed in the inner hemispherical surface 128. Slots 134 facilitate a flow of lubricant between the inner hemispherical bearing surface 128 and an outer surface 136 of the ball portion 130. The metal lower bearing 126 further includes an axial lubricant passage 137, aligned with the lubrication or wear indicator passage 109, through which lubricant can be delivered to the bearing surfaces.

As seen in Figure 1A, the movable stud member 132 consists of the spherical head portion 130, and an elongated shank portion 138. Those of ordinary skill in the art will recognize that the particular shape and configuration of the shank portion 138 may be varied depending upon the particular application for which the movable joint 100 is configured. For example, as shown in Figure 1A, the shank portion 138 may include a reduced diameter neck portion 140 upon which the head portion 130 is formed, one or more constant radius segments 142, and one or more tapered segments 144. The shank portion 138 may further include one or more features designed to facilitate a connection to other components (not shown) which may include, but are not limited to, threads 146 and one or more bores 148.

Once the lower metal bearing 126 and movable stud member 132 are positioned in the central bore 104 during assembly, the remaining components of the movable joint 100 are installed. These include an annular metal upper bearing 150 configured to seat concentrically about the movable stud member 132, against the head portion 130 opposite from the lower metal bearing 126, a Belleville washer 152, and an annular cover plate 154.

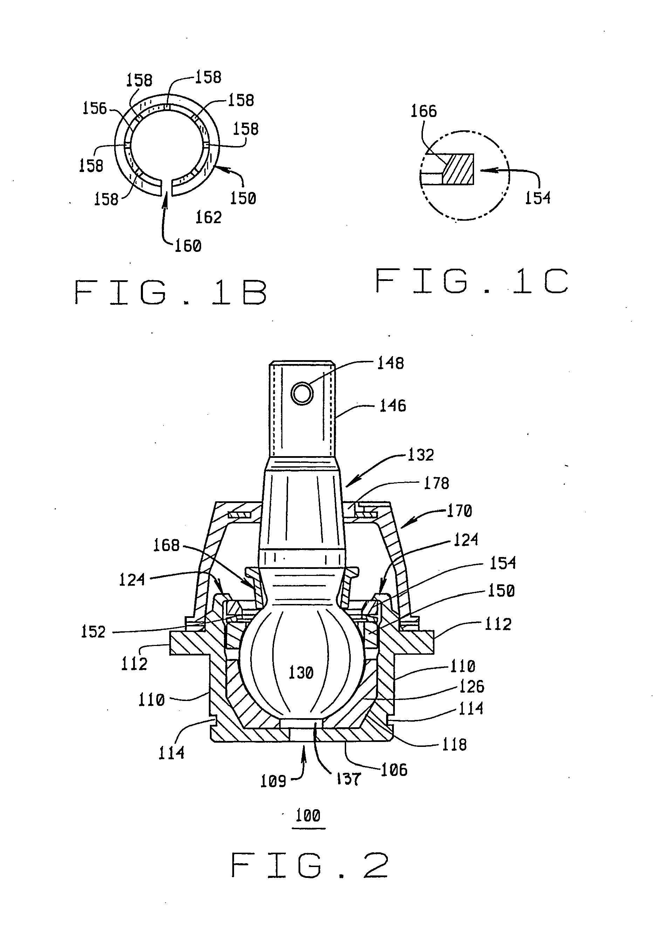

The annular upper metal bearing 150 seats within the upper bearing portion 120 of the central bore 104, and provides an inner hemispherical wear surface 156 for the top and sides of the movable stud member head portion 130. As seen in Figure 1B, the annular upper metal bearing 150 includes one or more lubrication slots 158, and a split 160 extending from the inner surface 156 to an exterior surface 162. The split 160 permits the annular upper metal bearing 150 to fully engage the inner surface of the central bore 104 and the head portion 130 simultaneously, limiting movement of the movable stud member 132 when loaded in axial and radial directions. The upper metal bearing 150 is preferably sized to move axially within the central bore 104, providing a constant wear surface 156 for the head portion 130, and providing axial and radial support during normal wear of the internal components of the movable joint 100.

Prior to installing the cover plate 154 in the central bore 104, the Belleville washer 152 is disposed about the movable stud member 132, and seated on an upper surface 164 of the annular upper metal bearing 150. The Belleville washer 152 or washer spring is configured to provide a preload on the assembled components of the movable joint 100, and to establish a desired torque during assembly thereof. After assembly, the load provided by the Belleville washer 152 maintains the simultaneous contact between the upper metal bearing 150, the head portion 130, and the inner surface 120 of the central bore 104.

To complete the assembly of the components within the housing 102, the annular cover plate 154 is disposed about the movable stud member 132, and positioned within the central bore 104. The reduced-thickness deformable portion 124 of the housing 102 is then swaged or rolled in a radially inward direction to capture the cover plate 154 and enclose components within the central bore 104. During the swaging or rolling processes, the Belleville washer 152 is compressed between the cover plate 154 and the upper surface 164 of the upper metal bearing 150, establishing the desired preload force on the housing internal components. Preferably, as shown in Figure 1C, the cover plate 154 includes a chamfered inner surface 166. The surface 166 provides clearance for the movable stud member 132 during articulation within the housing 102.

As illustrated in Figures 1A and 2, a restrictor 168 and a dust cover 170 may optionally be installed about the movable stud member 132. The restrictor 168 consists of a tubular body 171 having an annular region 172 of increased thickness adjacent an upper end 174. When the restrictor 168 is disposed about the neck portion 140 of the stud member 132, the annular region 172 and body 174 of the restrictor 168 act to limit the range of articulation of the stud member 132 by contacting the swaged or rolled deformation portion 124 of the housing 102.

The dust cover 170 is preferably formed from a flexible rubber or other elastomeric material, and is secured to the exterior of the housing 102 by a snap-ring 176 disposed within the dust cover itself, or other conventional retaining member. The movable stud member 132 passes through a fitted opening 178 in the top of the dust cover 170, exposing a portion of the stud member 132 for coupling to other components (not shown), such as a vehicle suspension.

Those skilled in the art will readily recognize that a variety of shapes and configurations for housing 102 and movable stud member 132 are possible, together with associated configurations of bearings 126 and 150, depending upon the particular application for which the movable joint 100 is intended. For example, the stud 132 may include a hemispherical or cylindrical head, or the cylindrical body may include threads 146, bores as at 148, or grooves for attachment of external components (not shown).

In view of the above, it will be seen that the several objects of the invention are achieved and other advantageous results are obtained. As various changes could be made in the above constructions without departing from the scope of the invention, it is intended that all matter contained in the above description or shown in the accompanying drawings shall be interpreted as illustrative and not in a limiting sense.

## Claims

1. A movable joint comprising a metal housing (102) having a side wall which defines a central bore (104) having a closed end (106) and an open end (108), a lower bearing (126) disposed within said central bore (104) adjacent said closed end (106), a metal movable member (132) having a head end portion (130) disposed in said central bore (104) and a shank portion (138) extending from said head end portion (130), said head end portion (130) engaging said lower bearing (126) in said central bore (104), said shank portion (138) being at least partially disposed outside of said central bore (104), an annular metal upper bearing (150) disposed about said movable member (132) within said central bore (104) adjacent said open end (108), said upper bearing (150) having an inner surface (156) engaging said head end portion (130) in direct metal-to-metal sliding contact and an outer surface engaging said side wall, an annular cover plate (154) disposed about said movable member (132) and secured within said central bore (104) adjacent said open end (108) and a spring member (152) compressed between said annular cover plate (154) and an upper surface (164) of said annular metal upper bearing (150), **characterised in that**
said lower bearing (126) is also of metal and said upper bearing (150) has a split segment (160) extending from said inner surface (156) to said outer surface,
**and in that** said metal housing (102) has an axial lubrication port (109) disposed in said closed end (106) of said central bore (104), said metal lower bearing (126) includes a lubrication slot (137) which is generally axially aligned with said central lubrication port (109) in said metal housing (102) to provide a common lubrication passageway, and said head end portion (130) further includes a flat spot in direct facing opposition to said lubrication slot (137) of said metal lower bearing (126).

2. A movable joint according to claim 1 wherein said annular cover plate (154) and said spring member (152) are composed of metal.

3. A movable joint according to claim 1 or 2 wherein said spring member (152) is configured to exert an axial preload force on said annular metal upper bearing (150) towards said closed end (106) of said central bore (104); and
wherein said annular metal upper bearing (150) is configured to engage said side wall and said head end portion (130) simultaneously.

4. A movable joint according to claim 1, 2 or 3 wherein said annular metal upper bearing (150) is axially displaceable within said central bore (104).

5. A movable joint of claim 1 wherein said metal lower bearing (126) is retained with said central bore (104) by an interference fit.

6. A movable joint according to any preceding claim further including a dust boot restrictor (168) disposed about said shank portion (138).

7. A movable joint according to any preceding claim further including a flexible dust cover (170) coupled between said housing (102) and said shank portion (138) of said movable member (132).

8. A movable joint according to any preceding claim wherein said annular metal upper bearing (150) includes at least one lubrication slot (158) disposed on an inner bearing surface (156).

9. A movable joint according to any preceding claim wherein said housing (102) includes a deformable annular region (124) adjacent said open end (108) of said central bore (104), said deformable annular region (124) adapted for radially inward deformation to secure said annular cover plate (154) within said central bore (104).

10. A movable joint according to any preceding claim wherein said annular cover plate (154) includes a chamfered inner surface (166) which is configured to restrict articulation of said movable member (132).

## Patentansprüche

1. Bewegliches Gelenk, umfassend ein Metallgehäuse (102) mit einer Seitenwand, die ein mittiges Loch (104) mit einem geschlossenen Ende (106) und einem offenen Ende (108) definiert, ein unteres Lager (126), das innerhalb des mittigen Lochs (104) angrenzend an das geschlossene Ende (106) angeordnet ist, ein metallisches bewegliches Element (132) mit einem Kopfendteil (130), der in dem mittigen Loch (104) angeordnet ist und einem Schaftteil (138), der sich von dem Kopfendteil (130) erstreckt, wobei der Kopfendteil (130) mit dem unteren Lager (126) in dem mittigen Loch (104) in Eingriff steht, wobei der Schaftteil (138) zumindest teilweise außerhalb des mittigen Lochs (104) angeordnet ist,
ein ringförmiges metallisches oberes Lager (150), das um das bewegliche Element (132) innerhalb des mittigen Lochs (104) angrenzend an das offene Ende (108) angeordnet ist, wobei das obere Lager (150) eine innere Oberfläche (156) aufweist, die mit dem Kopfendteil (130) in direktem Metall-auf-Metall-Gleitkontakt in Eingriff steht, und eine äußere Oberfläche, die mit der Seitenwand in Eingriff steht, eine ringförmige Abdeckplatte (154), die um das bewegliche Element (132) angeordnet ist und innerhalb des mittigen Lochs (104) angrenzend an das offene Ende (108) fixiert ist, und ein Federelement (152), das zwischen der ringförmigen Abdeckplatte (154) und einer oberen Oberfläche (164) des ringförmigen metallischen oberen Lagers (150) komprimiert ist,
**dadurch gekennzeichnet, dass**
das untere Lager (126) ebenfalls aus Metall gefertigt ist und das obere Lager (150) ein Spaltsegment (160) aufweist, das sich von der inneren Oberfläche (156) zu der äußeren Oberfläche erstreckt,
und dass das Metallgehäuse (102) eine axiale Schmieröffnung (109) aufweist, angeordnet in dem geschlossenen Ende (106) des mittigen Lochs (104), wobei das metallische untere Lager (126) einen Schmierschlitz (137) aufweist, der im allgemeinen axial mit der mittigen Schmieröffnung (109) in dem Metallgehäuse (102) ausgerichtet ist, um einen gemeinsamen Schmierdurchgang bereitzustellen, und dass das Kopfendteil (130) weiter einen flachen Bereich direkt gegenüber dem Schmierschlitz (137) des metallischen unteren Lagers (126) aufweist.

2. Bewegliches Gelenk nach Anspruch 1, wobei die ringförmige Abdeckplatte (154) und das Federelement (152) aus Metall ausgebildet sind.

3. Bewegliches Gelenk nach Anspruch 1 oder 2, wobei das Federelement (152) so ausgelegt ist, dass es eine axiale Vorspannkraft auf das ringförmige metallische obere Lager (150) in Richtung des geschlossenen Endes (106) des mittigen Lochs (104) ausübt; und
wobei das ringförmige metallische obere Lager (150) so ausgelegt ist, dass es gleichzeitig mit der Seitenwand und mit dem Kopfendteil (130) in Eingriff steht.

4. Bewegliches Gelenk nach Anspruch 1, 2 oder 3, wobei das ringförmige metallische obere Lager (150) axial innerhalb des mittigen Lochs (104) verschiebbar ist.

5. Bewegliches Gelenk nach Anspruch 1, wobei das metallische untere Lager (126) in dem mittigen Loch (104) durch eine Presspassung gehalten wird.

6. Bewegliches Gelenk nach einem der vorherigen Ansprüche, weiter umfassend eine Staubmanschettenblende (168), die um den Schaftteil (138) herum angeordnet ist.

7. Bewegliches Gelenk nach einem der vorhergehenden Ansprüche, weiter umfassend eine flexible Staubabdeckung (170), die zwischen das Gehäuse (102) und den Schaftteil (138) des beweglichen Elements (132) gekoppelt ist.

8. Bewegliches Gelenk nach einem der vorhergehenden Ansprüche, wobei das ringförmige metallische obere Lager (150) mindestens einen Schmierschlitz (158)
einschließt, der auf einer inneren Lageroberfläche (156) angeordnet ist.

9. Bewegliches Gelenk nach einem der vorhergehenden Ansprüche, wobei das Gehäuse (102) einen verformbaren ringförmigen Bereich (124) angrenzend an das obere Ende (108) des mittigen Lochs (104) umfasst, wobei der verformbare ringförmige Bereich (124) zu einer radial nach innen gerichteten Verformung angepasst ist, um die ringförmige Abdeckplatte (154) innerhalb des mittigen Lochs (104) zu fixieren.

10. Bewegliches Gelenk nach einem der vorhergehenden Ansprüche, wobei die ringförmige Abdeckplatte eine abgeschrägte innere Oberfläche (166) umfasst, die dazu eingerichtet ist, eine Gelenkbewegung des beweglichen Elements (132) einzuschränken.

## Revendications

1. Articulation mobile comprenant un logement (102) métallique comportant une paroi latérale qui définit un alésage central (104) comportant une extrémité fermée (106) et une extrémité ouverte (108), un palier inférieur (126) disposé dans ledit alésage central (104) adjacent à ladite extrémité fermée (106), un élément mobile (132) métallique comportant une partie d'extrémité de tête (130) disposée dans ledit alésage central (104) et une partie formant tige (138) s'étendant de ladite partie d'extrémité de tête (130), ladite partie d'extrémité de tête (130) venant en prise avec ledit palier inférieur (126) dans ledit alésage central (104), ladite partie formant tige (138) étant au moins partiellement disposée à l'extérieur dudit alésage central (104), un palier supérieur (150) métallique annulaire disposé autour dudit élément mobile (132) dans ledit alésage central (104) adjacent à ladite extrémité ouverte (108), ledit palier supérieur (150) comportant une surface interne (156) en prise avec ladite partie d'extrémité de tête (130) en contact coulissant métal sur métal et une surface externe en prise avec ladite paroi latérale, une plaque de recouvrement (154) annulaire disposée autour dudit élément mobile (132) et fixée dans ledit alésage central (104) adjacente à ladite extrémité ouverte (108) et un élément élastique (152) comprimé entre ladite plaque de recouvrement (154) annulaire et une surface supérieure (164) dudit palier supérieur (150) métallique annulaire, **caractérisée en ce que**
ledit palier inférieur (126) est également en métal et ledit palier supérieur (150) comporte un segment retiré (160) s'étendant de ladite surface interne (156) vers ladite surface externe,
et **en ce que** ledit logement (102) métallique comporte un orifice de lubrification (109) axial disposé dans ladite extrémité fermée (106) dudit alésage central (104), ledit palier inférieur (126) métallique comprend une fente de lubrification (137) qui est généralement alignée axialement avec ledit orifice de lubrification central (109) dans ledit logement (102) métallique pour réaliser un passage de lubrification commun, et ladite partie d'extrémité de tête (130) comprend en outre un méplat disposé directement face à ladite fente de lubrification (137) dudit palier inférieur (126) métallique.

2. Articulation mobile selon la revendication 1, dans laquelle ladite plaque de recouvrement (154) annulaire et ledit élément élastique (152) sont composés de métal.

3. Articulation mobile selon la revendication 1 ou 2, dans laquelle ledit élément élastique (152) est configuré pour exercer une force de précharge axiale sur ledit palier supérieur (150) métallique annulaire vers ladite extrémité fermée (106) dudit alésage central (104) ; et
dans laquelle ledit palier supérieur (150) métallique annulaire est configuré pour être en prise avec ladite paroi latérale et ladite partie d'extrémité de tête (130) simultanément.

4. Articulation mobile selon la revendication 1, 2 ou 3, dans laquelle ledit palier supérieur (150) métallique annulaire peut être déplacé axialement dans ledit alésage central (104).

5. Articulation mobile selon la revendication 1, dans laquelle ledit palier inférieur (126) métallique est retenu avec ledit alésage central (104) par un ajustement avec serrage.

6. Articulation mobile selon l'une quelconque des revendications précédentes, comprenant en outre un pare-poussière (168) disposé autour de ladite partie formant tige (138).

7. Articulation mobile selon l'une quelconque des revendications précédentes, comprenant en outre un couvercle anti-poussière (170) flexible accouplé entre ledit logement (102) et ladite partie formant tige (138) dudit élément mobile (132).

8. Articulation mobile selon l'une quelconque des revendications précédentes, dans laquelle ledit palier supérieur (150) métallique annulaire comprend au moins une fente de lubrification (158) disposée sur une surface interne de palier (156).

9. Articulation mobile selon l'une quelconque des revendications précédentes, dans laquelle ledit logement (102) comprend une région annulaire (124) déformable adjacente à ladite extrémité ouverte (108) dudit alésage central (104), ladite région annulaire (124) déformable étant adaptée pour se déformer radialement vers l'intérieur pour fixer ladite plaque de recouvrement (154) annulaire dans ledit alésage central (104).

10. Articulation mobile selon l'une quelconque des revendications précédentes, dans laquelle ladite plaque de recouvrement (154) annulaire comprend une surface interne (166) chanfreinée qui est configurée pour limiter l'articulation dudit élément mobile (132).
